# FASCICULE DE BREVET EUROPEEN

(11) **EP 2 362 991 B1**
(45) Date de publication et mention de la délivrance du brevet: **23.01.2013**
(21) Numéro de dépôt: 09795496.0
(22) Date de dépôt: 23.11.2009
(51) Int. Cl.: H04N 21/40, H04N 21/858, H04N 7/173, H04N 5/445

(54) **SYSTÈME DE MISE EN RELATION D'UN UTILISATEUR AVEC UN TIERS DANS LE DOMAINE DE LA TÉLÉVISION NUMÉRIQUE**
SYSTEM ZUM VERBINDEN EINES BENUTZERS MIT EINEM DRITTEN AUF DEM GEBIET DES DIGITALFERNSEHENS
SYSTEM FOR CONNECTING A USER WITH A THIRD PARTY IN THE FIELD OF DIGITAL TELEVISION

(30) Priorité: 28.11.2008 FR 0858081
(43) Date de publication de la demande: 07.09.2011
(73) Titulaire: France Télécom, 75015 Paris (FR)
(72) Inventeur: PERRUFEL, Micheline, F-35740 Pace (FR); LECOQ, Christian, F-35520 Melesse (FR)
(74) Mandataire: Delumeau, François Guy
(86) Numéro de dépôt international: PCT/FR2009/052261
(87) Numéro de publication internationale: WO 2010/061111

(56) Documents cités:
- US-A1- 2002 144 282
- US-A1- 2002 157 108
- US-A1- 2004 031 052
- US-A1- 2004 163 114

## Description

### Arrière-plan de l'invention

L'invention se situe dans le domaine de la télévision numérique.

Depuis l'essor de la télévision numérique diffusée sur le réseau Internet, l'offre de services à l'utilisateur, et plus spécialement l'offre de services interactifs, comme la vidéo à la demande (en anglais VOD) s'est considérablement enrichie.

Cependant, il a été constaté par la Demanderesse, que l'un des freins important au déploiement plus important de tels services réside dans la difficulté que rencontrent les utilisateurs de l'offre pour joindre facilement un conseiller apte à lui fournir des renseignements d'ordre général ou sur une offre de service particulière.

Aussi, de nombreux fournisseurs de service proposent un service après-vente constitué le plus souvent par un numéro de téléphone unique, l'utilisateur étant mis en relation avec un opérateur ou avec un serveur vocal apte à l'aiguiller vers l'interlocuteur capable de répondre à sa demande de renseignements.

Ce mécanisme de service après-vente pose de nombreux problèmes souvent dénoncés par les utilisateurs.

En premier lieu, il est fréquent qu'un utilisateur ait besoin d'appeler plusieurs fois ce numéro unique pour obtenir un conseiller disponible.

En deuxième lieu, une fois l'utilisateur mis effectivement en relation avec un conseiller, il est fréquent que le conseiller ne soit pas la personne la plus adaptée à répondre à une demande de renseignements particulière. Le conseiller essaie alors de basculer la communication vers un autre conseiller. Lorsque celui-ci n'est pas disponible, l'utilisateur est alors obliger de réappeler une nouvelle fois le numéro unique, et de reformuler sa demande auprès de ce nouveau conseiller.

L'invention vise notamment à résoudre les problèmes précités.

Les documents US-A1-2002/0157108, US-A1-2004/0163114 et US-A1-2002/0144282 décrivent des systèmes de télévision interactive où un utilisateur à la possibilité de sélectionner des contenus fournis par des fournisseurs de contenus à travers d'un serveur.

### Objet et résumé de l'invention

A cet effet, l'invention vise un système de mise en relation d'un utilisateur d'un décodeur de flux vidéo avec un tiers conformément à la revendication 1.

Ainsi, et d'une façon générale, l'invention permet de mettre automatiquement en relation l'utilisateur avec un conseiller, par simple utilisation de la télécommande du décodeur de télévision numérique.

Dans un mode particulier de réalisation de l'invention, le décodeur comporte une mémoire non volatile réinscriptible comportant le lien précité.

Ce lien peut par exemple être modifié par l'opérateur à travers le réseau. Cette caractéristique permet avantageusement à l'opérateur de rediriger l'utilisateur vers un centre de service après-vente moins surchargé.

Dans un autre mode de réalisation de réalisation, le décodeur comporte des moyens pour extraire le lien précité d'un flux secondaire synchronisé avec le flux vidéo.

Ce système permet très avantageusement, de modifier le lien en fonction du flux vidéo reçu par le décodeur et de rediriger, à tout moment, l'utilisateur vers le conseiller le plus approprié en fonction du contenu du flux vidéo.

Par exemple, l'image qui s'affiche sur l'écran du téléviseur est une page HTLM qui peut comporter une fenêtre dans lequel s'affiche le flux vidéo, et, en vis-à-vis de cette fenêtre, le lien activable par la télécommande de l'utilisateur.

Ce système particulier peut très avantageusement être utilisé pour offrir un service de téléachat, l'utilisateur étant automatiquement mis en relation avec un conseiller apte à le renseigner sur les caractéristiques du produit proposé à cet instant par la chaîne de téléachat.

Différentes possibilités peuvent être mises en oeuvre pour mettre l'utilisateur en relation avec le conseiller.

Dans un mode de réalisation, le serveur est apte à établir un canal de communication entre les terminaux de ces deux personnes.

Ce mode de réalisation particulier peut être mis en oeuvre en utilisant un serveur d'application SIP, ou un serveur de réseau intelligent implémentant le protocole CAMEL phase 4, ou une version du protocole INAP.

Dans un autre mode de réalisation de l'invention, le serveur comporte des moyens pour envoyer un message à un terminal du tiers, ce message comportant l'identifiant du terminal de l'utilisateur.

Ce message peut être notamment constitué par un message électronique (email) ou par un message court (SMS).

Quoiqu'il en soit, dans ce mode de réalisation, le conseiller (c'est-à-dire le tiers) peut rappeler l'utilisateur après avoir pris connaissance des renseignements particuliers susceptibles de répondre à l'attente de l'utilisateur.

Différentes solutions peuvent être envisagées pour fournir l'identifiant du terminal de l'utilisateur.

Dans un premier mode de réalisation, un champ de saisie est prévu sur une page HTLM affichée à l'écran, ce champ pouvant être utilisé par l'utilisateur pour spécifier le numéro du terminal sur lequel il souhaite être contacté.

En variante, le décodeur comporte une mémoire non volatile réinscriptible comportant au moins un identifiant du terminal de l'utilisateur (téléphone fixe, téléphone mobile, ...).

Corrélativement, l'invention vise également un procédé de mise en relation d'un utilisateur d'un décodeur de flux vidéo avec un tiers conformément à la revendication 8.

Le procédé de mise en relation selon l'invention présente des avantages analogues à ceux du système de mise en relation selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.

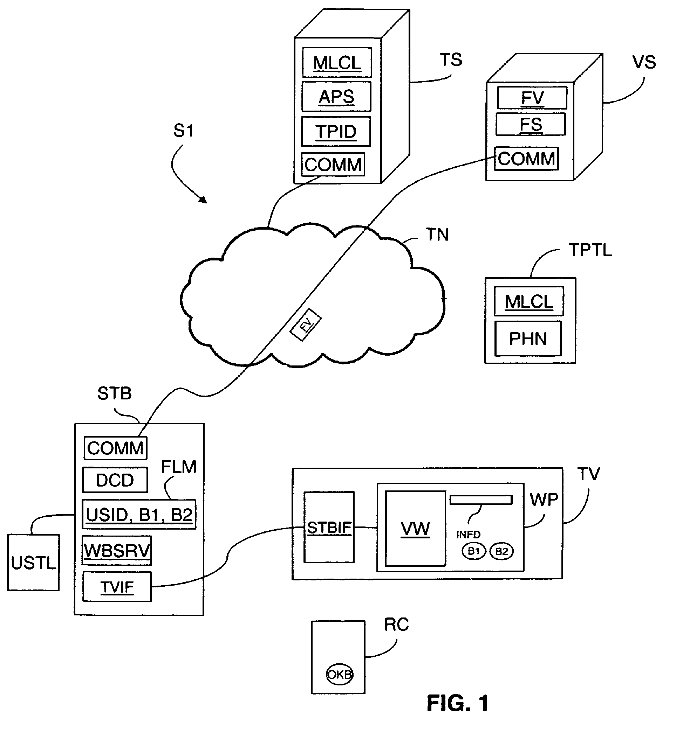

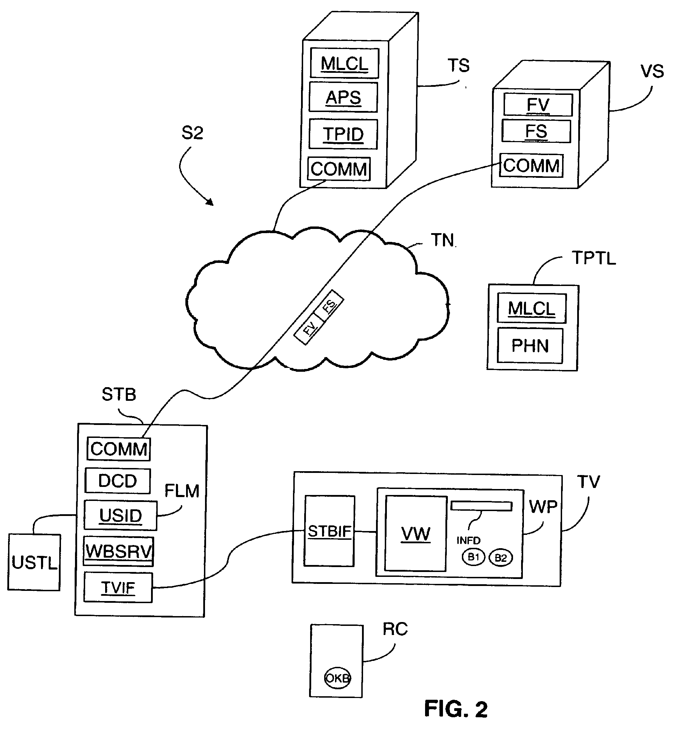

Les figures 1 et 2 représentent deux systèmes pour mettre en relation un utilisateur d'un décodeur de flux vidéo avec un tiers conformes à deux modes de réalisation particuliers de mise en oeuvre de l'invention.

### Description détaillée de deux modes de réalisation

La **figure 1** représente un premier système conforme à l'invention.

Sur cette figure 1 on a représenté un réseau de télécommunication TN auquel est connecté un serveur vidéo VS apte à diffuser des flux vidéo FV.

Un décodeur (ou Set-Tob Box) STB, connecté au réseau de télécommunication TN est apte à recevoir de tels flux et à les restituer sur un écran de télévision TV.

Les équipements connectés aux réseaux de télécommunication TN comportent tous des moyens de communications COMM classiques.

Le décodeur STB comporte, de façon classique, des moyens DCD de décodage du flux vidéo FV et un module TVIF apte à s'interfacer, comme de façon connue, avec un module STBIF d'interface de l'écran de télévision TV.

Dans l'exemple de réalisation décrit ici, le décodeur STB comporte une interface non référencée vers un terminal USTL de l'utilisateur. Dans ce mode particulier de réalisation, le décodeur STB constitue également un modem routeur permettant à l'utilisateur d'accéder au réseau internet.

Dans l'exemple de réalisation décrit ici, le décodeur STB comporte un serveur web WBSRV apte à générer et à afficher une page web WP sur l'écran de télévision TV.

Dans l'exemple de réalisation décrit ici, cette page web WB comporte une fenêtre VW dans lequel le décodeur STB affiche le flux vidéo FV reçu du serveur vidéo VS.

Dans le mode de réalisation décrit ici, le décodeur STB comporte une mémoire non volatile réinscriptible FLM dans lequel est mémorisée l'identifiant USID du terminal USTL.

Le décodeur STB peut être contrôlé, de façon classique, par une télécommande RC. Cette télécommande permet notamment de sélectionner le flux vidéo FV diffusé par le serveur vidéo VS.

Conformément à l'invention, le décodeur STB est apte à afficher, sur l'écran de télévision TV, au moins un lien vers un serveur TS connecté au réseau de télécommunications TN.

Dans l'exemple de réalisation décrit ici, la mémoire non volatile réinscriptible FLM comporte plus précisément deux liens B1, B2 qui peuvent être modifiés par un opérateur à travers le réseau de télécommunications TN.

Chacun de ces liens peut être activé par l'utilisateur au moyen d'un bouton OKB de sa télécommande RC.

Dans l'exemple de réalisation décrit ici, la page web WP comporte en outre un champ de saisie INFD dans lequel l'utilisateur peut saisir l'identifiant d'un autre terminal par exemple le numéro de son téléphone mobile.

L'activation de l'un ou l'autre des liens B1, B2 permet de mettre en relation l'utilisateur du décodeur STB avec un tiers, et plus précisément avec un conseiller.

L'identifiant TPID du terminal TPTL du conseiller peut être obtenu par le serveur TS de différentes façons.

Cet identifiant TPID peut par exemple être contenu dans la requête émise par le décodeur STB.

Cet identifiant TPID peut aussi être mémorisé dans le serveur TS lui-même.

Dans l'exemple de réalisation décrit ici :
- le lien B1 est activé par l'utilisateur lorsqu'il souhaite qu'une communication immédiate soit établie avec le conseiller ; et
- le lien B2 est activé par l'utilisateur lorsqu'il souhaite être rappelé ultérieurement par le conseiller.

Conformément à l'invention, l'activation d'un lien B1 ou B2 entraîne l'émission d'une requête par le décodeur STB vers le serveur TS.

Dans l'exemple de réalisation décrit ici, les requêtes émises par le décodeur STB vers le serveur TS comportent l'identifiant saisi dans la zone INFD si il existe ou, par défaut l'identifiant USID mémorisé dans la mémoire FML. Dans le cas d'une requête émise suite à l'activation du lien B2, la requête peut aussi comporter un créneau horaire auquel l'utilisateur souhaite être rappelé.

Sur réception d'une requête émise suite à l'activation du lien B1, le serveur TS met en oeuvre des moyens APS pour mettre en relation le terminal de l'utilisateur dont l'identifiant a été reçu dans la requête avec un module PHN de téléphonie du terminal TPTL du conseiller. Dans l'exemple de réalisation décrit ici, les moyens APS pour mettre en relation l'utilisateur avec le conseiller sont constitués par un serveur d'application SIP.

Sur réception d'une requête émise suite à l'activation du lien B2, le serveur TS envoie, grâce à son client mail MLCL, un courrier électronique au terminal TPTL du conseiller, ce terminal étant lui aussi équipé d'un client mail MLCL.

Dans l'exemple de réalisation décrit ici, c'est le conseiller qui choisit le moment auquel il doit contacter l'utilisateur du décodeur STB. En variante, un créneau horaire peut être spécifié par l'utilisateur dans le champ de saisie INFD.

Sur réception de ce courrier électronique, le conseiller peut contacter l'utilisateur du décodeur STB, soit au moment de son choix, soit dans le créneau horaire spécifié par l'utilisateur.

La **figure 2** représente un deuxième scénario de mise en oeuvre de l'invention.

Dans ce scénario, les liens B1, B2 ne sont pas mémorisés dans la mémoire non volatile réinscriptible FLM du décodeur STB.

Ils sont reçus dans un flux secondaire FS synchronisé avec le flux vidéo FV diffusé par le serveur vidéo VS.

Sur réception de ces deux flux synchronisés, le décodeur STB affiche le flux vidéo dans la fenêtre VW de la page web WP, et, en vis-à-vis, les liens B1, B2 reçus dans le flux secondaire FS.

L'utilisation de ces liens et l'effet de leur activation est similaire à ceux décrits précédemment en référence à la figure 1.

## Revendications

1. Système de mise en relation d'un utilisateur d'un décodeur (STB) de flux vidéo (FV) connecté à un réseau de télécommunication (TN) avec un tiers à travers d'un serveur (TS) aussi connecté au dit réseau de télécommunication (TN) comportant :
- ledit décodeur (STB), celui-ci comportant :
- des moyens (DCD) pour décoder ledit flux et le restituer sur un écran de télévision (TV) ;
- des moyens (TVIF) d'obtention d'un identifiant (USID) d'un terminal (USTL) dudit utilisateur ;
- des moyens (TVIF) pour afficher, sur ledit écran de télévision (TV), une image (WP) comportant au moins un lien (B1, B2) vers ledit serveur (TS), ledit lien pouvant être activé sur réception d'un signal émis par une télécommande (RC) dudit décodeur (STB), ledit lien (B1, B2) étant mémorisé dans une mémoire non volatile (FLM) réinscriptible dudit décodeur (STB) et étant modifiable par un opérateur connecté au réseau (TN); et
- des moyens (COMM) d'envoi d'une requête comportant ledit identifiant de terminal (USID) à destination dudit serveur (TS) lorsque ledit lien (B1, B2) est activé par la télécommande (RC) ;
- ledit serveur (TS), celui-ci comportant :
- des moyens (COMM) de réception de ladite requête;
- des moyens d'obtention d'un identifiant (TPID) d'un terminal téléphonique (TPTL) dudit tiers; et
- des moyens (CASU, MLCL) permettant d'établir une communication téléphonique entre lesdits terminaux (USTL, TPTL).

2. Système de mise en relation selon la revendication 1, **caractérisé en ce qu'**il comporte des moyens (DCD) pour extraire ledit lien (B1, B2) d'un flux secondaire synchronisé avec le flux vidéo (FV) et **en ce que** ladite image est une page HTML comportant une fenêtre (VW) pour afficher le flux vidéo (FV).

3. Système de mise en relation selon la revendication 2, **caractérisé en ce que** ledit décodeur (STB) comporte lesdits moyens (DCD) pour extraire ledit lien (B1, B2) d'un flux secondaire synchronisé avec le flux vidéo (FV)

4. Système de mise en relation selon la revendication 1, **caractérisé en ce que** ledit serveur (TS) est apte à établir un canal de communication entre lesdits terminaux (USTL, TPTL).

5. Système de mise en relation selon la revendication 1, **caractérisé en ce que** ledit serveur (TS) comporte des moyens (MLCL) d'envoi d'un message à un terminal (TPTL) dudit tiers comportant l'identifiant (USID) du terminal (USTL) de l'utilisateur.

6. Système de mise en relation selon la revendication 1, **caractérisé en ce que** ladite image est une page HTML (WP) comportant un champ (INFD) de saisie de l'identifiant (USID) du terminal (USTL) de l'utilisateur.

7. Système de mise en relation selon la revendication 1, **caractérisé en ce que** ledit décodeur (STB) comporte une mémoire (FLM) non volatile réinscriptible comportant au moins un identifiant (USID) d'un terminal (USTL) de l'utilisateur.

8. Procédé de mise en relation d'un utilisateur d'un décodeur (STB) de flux vidéo (FV) connecté à un réseau de télécommucation (TN) avec un tiers à travers d'un serveur (TS) aussi connecté au dit réseau de télécommucation (TN) comportant :
- une étape de décodage et de restitution dudit flux sur un écran de télévision (TV) ;
- une étape d'obtention d'un identifiant (USID) d'un terminal (USTL) dudit utilisateur ;
- une étape d'affichage, sur ledit écran de télévision (TV), d'une image (WP) comportant au moins un lien (B1, B2) vers ledit serveur de mise en relation (TS), ledit lien pouvant être activé sur réception d'un signal émis par une télécommande (RC) dudit décodeur (STB), ledit lien (B1, B2) étant mémorisé dans une mémoire non volatile (FLM) réinscriptible dudit décodeur (STB) et étant modifiable par un operateur connecté au réseau (TN); et
- une étape d'envoi d'une requête comportant ledit identifiant de terminal (USID) à destination dudit serveur de mise en relation (TS) lorsque ledit lien (B1, B2) est activé par la télécommande (RC), déclenchant une étape de mise en relation téléphonique entre ledit terminal dudit utilisateur et un terminal téléphonique dudit tiers.

## Claims

1. System for connecting a user of a decoder (STB) of video streams (FV) connected to a telecommunication network (TN) with a third party through a server (TS) also connected to said telecommunication network (TN) comprising:
- said decoder (STB), the latter comprising:
- means (DCD) for decoding said stream and for playing it back on a television screen (TV);
- means (TVIF) for obtaining an identifier (USID) of a terminal (USTL) of said user;
- means (TVIF) for displaying, on said television screen (TV), an image (WP) including at least one link (B1, B2) to said server (TS), said link being able to be activated on reception of a signal transmitted by a remote control (RC) of said decoder (STB), 1 said link (B1, B2) being stored in a rewritable non-volatile memory (FLM) of said decoder (STB) and being modifiable by an operator connected to the network (TN), and
- means (COMM) for sending a request including said terminal identifier (USID) to said server (TS) when said link (B1, B2) is activated by the remote control (RC);
- said server (TS), the latter comprising:
- means (COMM) for receiving said request;
- means for obtaining an identifier (TPID) of a telephone terminal (TPTL) of said third party; and
- means (CASU, MLCL) making it possible to set up a telephone communication between said terminals (USTL, TPTL).

2. Connection system according to Claim 1, **characterized in that** it comprises means (DCD) for extracting said link (B1, B2) from a secondary stream synchronized with the video stream (FV) and **in that** said image is an HTML page comprising a window (VW) for displaying the video stream (FV).

3. Connection system according to Claim 2, **characterized in that** said decoder (STB) includes said means (DCD) for extracting said link (B1, B2) from a secondary stream synchronized with the video stream (FV).

4. Connection system according to Claim 1, **characterized in that** said server (TS) is capable of setting up a communication channel between said terminals (USTL, TPTL).

5. Connection system according to Claim 1, **characterized in that** said server (TS) includes means (MLCL) for sending a message to a terminal (TPTL) of said third party including the identifier (USID) of the terminal (USTL) of the user.

6. Connection system according to Claim 1, **characterized in that** said image is an HTML page (WP) including a field (INFD) for entering the identifier (USID) of the terminal (USTL) of the user.

7. Connection system according to Claim 1, **characterized in that** said decoder (STB) includes a rewritable non-volatile memory (FLM) including at least one identifier (USID) of a terminal (USTL) of the user.

8. Method for connecting a user of a decoder (STB) of video streams (FV) connected to a telecommunication network (TN) with a third party through a server (TS) also connected to said telecommunication network (TN) comprising:
- a step of decoding and playing back said stream on a television screen (TV);
- a step of obtaining an identifier (USID) of a terminal (USTL) of said user;
- a step of displaying, on said television screen (TV), an image (WP) including at least one link (B1, B2) to said connection server (TS), said link being able to be activated on reception of a signal transmitted by a remote control (RC) of said decoder (STB), said link (B1, B2) being stored in a rewritable non-volatile memory (FLM) of said decoder (STB) and being modifiable by an operator connected to the network (TN); and
- a step of sending a request including said terminal identifier (USID) to said connection server (TS) when said link (B1, B2) is activated by the remote control (RC), triggering a step of setting up a telephone connection between said terminal of said user and a telephone terminal of said third party.

## Patentansprüche

1. System zum Verbinden eines Benutzers eines Decoders (STB) eines Videoflusses (FV), der an ein Fernmeldenetz (TN) angeschlossen ist, mit einem Dritten über einen Server (TS), der ebenfalls an das Fernmeldenetz (TN) angeschlossen ist, umfassend:
- den Decoder (STB), welcher Folgendes umfasst:
- Mittel (DCD), um den Fluss zu decodieren und ihn auf einem Fernsehbildschirm (TV) wiederzugeben;
- Mittel (TVIF) für den Empfang eines Identifikators (USID) eines Terminals (USTL) des Benutzers;
- Mittel (TVIF), um auf dem Fernsehbildschirm (TV) ein Bild (WP) anzuzeigen, das mindestens eine Verbindung (B1, B2) zum Server (TS) umfasst, wobei die Verbindung bei Empfang eines Signals, das von einer Fernsteuerung (RC) des Decoders (STB) entsandt wird, aktiviert werden kann, wobei die Verbindung (B1, B2) in einem wieder beschreibbaren Permanentspeicher (FLM) des Decoders (STB) gespeichert wird und durch einen an das Netz (TN) angeschlossenen Benutzer veränderbar ist, und
- Mittel (COMM) zum Senden einer Anfrage, umfassend den Terminalidentifikator (USID), in Richtung des Servers (TS), wenn die Verbindung (B1, B2) durch die Fernsteuerung (RC) aktiviert wird;
- den Server (TS), der Folgendes umfasst:
- Mittel (COMM) für den Empfang der Anfrage;
- Mittel für den Empfang eines Identifikators (TPID) eines Telefonterminals (TPTL) des Dritten; und
- Mittel (CASU, MLCL), die es ermöglichen, eine Telefonverbindung zwischen den Terminals (USTL, TPTL) herzustellen.

2. System zum Verbinden nach Anspruch 1, **dadurch gekennzeichnet, dass** es Mittel (DCD) umfasst, um die Verbindung (B1, B2) eines mit dem Videofluss (FV) synchronisierten Sekundärflusses zu extrahieren, und dass das Bild eine HTML-Seite ist, umfassend ein Fenster (VW), um den Videofluss (FV) anzuzeigen.

3. System zum Verbinden nach Anspruch 2, **dadurch gekennzeichnet, dass** der Decoder (STB) die Mittel (DCD) zur Extraktion der Verbindung (B1, B2) eines mit dem Videofluss (FV) synchronisierten Sekundärflusses umfasst.

4. System zum Verbinden nach Anspruch 1, **dadurch gekennzeichnet, dass** der Server (TS) geeignet ist, einen Verbindungskanal zwischen den Terminals (USTL, TPTL) zu erstellen.

5. System zum Verbinden nach Anspruch 1, **dadurch gekennzeichnet, dass** der Server (TS) Mittel (MLCL) zum Senden einer Meldung an ein Terminal (TPTL) des Dritten besitzt, umfassend den Identifikator (USID) des Terminals (USTL) des Benutzers.

6. System zum Verbinden nach Anspruch 1, **dadurch gekennzeichnet, dass** das Bild eine HTML-Seite (WP) ist, umfassend ein Feld (INFD) zur Erfassung des Identifikators (USID) des Terminals (USTL) des Benutzers.

7. System zum Verbinden nach Anspruch 1, **dadurch gekennzeichnet, dass** der Decoder (STB) einen wieder beschreibbaren Permanentspeicher (FLM) besitzt, umfassend mindestens einen Identifikator (USID) eines Terminals (USTL) des Benutzers.

8. Verfahren zum Verbinden eines Benutzers eines Decoders (STB) eines Videoflusses (FV), der an ein Fernmeldenetz (TN) angeschlossen ist, mit einem Dritten über einen Server (TS), der ebenfalls an das Fernmeldenetz (TN) angeschlossen ist, umfassend:
- einen Schritt des Decodierens und der Wiedergabe des Flusses auf einem Fernsehbildschirm (TV) ;
- einen Schritt des Empfangens eines Identifikators (USID) eines Terminals (USTL) des Benutzers;
- einen Schritt der Anzeige eines Bildes (WP) auf dem Fernsehbildschirm (TV), umfassend mindestens eine Verbindung (B1, B2) zum Server zum Verbinden (TS), wobei die Verbindung bei Empfang eines von einer Fernsteuerung (RC) des Decoders (STB) entsandten Signals aktiviert werden kann, wobei die Verbindung (B1, B2) in einem wieder beschreibbaren Permanentspeicher (FLM) des Decoders (STB) gespeichert wird und durch einen an das Netz (TN) angeschlossenen Benutzer veränderbar ist; und
- einen Schritt des Sendens einer Anfrage, umfassend den Terminalidentifikator (USID), in Richtung des Verbindungsservers (TS), wenn die Verbindung (B1, B2) durch die Fernsteuerung (RC) aktiviert wird, wodurch ein Schritt der Herstellung einer Telefonverbindung zwischen dem Terminal des Benutzers und einem Telefonterminal des Dritten ausgelöst wird.
